# EUROPEAN PATENT SPECIFICATION

(11) **EP 2 215 916 B1**
(45) Date of publication and mention of the grant of the patent: **11.07.2012**
(21) Application number: 09151216.0
(22) Date of filing: 23.01.2009
(51) Int. Cl.: A23L 3/015, A23G 1/54, A23L 1/212, A23L 1/025

(54) **Method for treating a food using high pressure**
Verfahren zur Lebensmittelbehandlung mittels Hochdruck
Procédé de traitement des aliments à haute pression

(43) Date of publication of application: 11.08.2010
(73) Proprietor: Kraft Foods R & D, Inc., Northfield, IL 60093 (US)
(72) Inventor: Pfeifer, Dr., Jochen Klaus Siegfried, 82377, Penzberg (DE); Legan, James David, Libertyville, IL 60048 (US); Tay, Abdullatif, Grayslake, IL 60030 (US); Turek, Evan Joel, Libertyville, IL 60048 (US)
(74) Representative: HOFFMANN EITLE

(56) References cited:
- EP-A- 1 621 085
- EP-A- 1 891 864
- DATABASE WPI Week 200505 Thomson Scientific, London, GB; AN 2005-043694 XP002529452 & JP 2004 357647 A (MARS INC) 24 December 2004 (2004-12-24)

## Description

### Technical field

The present invention relates to a method for the high pressure treatment of a food comprising a component having a low water activity.

### Background of the Invention

Foods comprising a combination of a confectionary material having a relatively low water activity (e.g. chocolate) and a component having a relatively high water activity (e.g. fresh fruit and/or a dairy component) have a unique and desirable taste. However, such foods typically have a short shelf-life. This is primarily due to two factors:

Firstly, the foods are prone to rapid spoilage, discolouration and flavour impairment due to microbial contamination of the confectionary material in the presence of the high water activity component. For instance, a chocolate-coated fresh fruit praline which has not been subjected to a preservation treatment (e.g. pasteurization) typically has a shelf-life of four days or less, so is not suitable for large-scale manufacture and distribution. Secondly, confectionary materials such as chocolate are moisture-sensitive in that they dissolve in the presence of a high water activity component. This compromises the flavour, texture and appearance of the foods.

The water activity (a_{W}) of a food is a measure of the amount of water in the food which is available to support the growth of micro-organisms such as bacteria, yeasts and moulds. It is properly defined as the ratio of the water vapour pressure over a food (p) to that over pure water (p₀) at the same temperature, pure water having an a_{W} value of exactly 1.

Foods having a water activity above about 0.60, particularly above about 0.70, support the growth of moulds and yeasts. More significantly, a water activity of 0.85 represents the critical value above which bacterial spoilage occurs and food poisoning becomes a real risk. Foods having a water activity of about 0.80 or more (e.g. fresh fruit) are therefore prone to microbial spoilage unless they are stored under conditions which slow or prevent the growth of micro-organisms in the foods, e.g. low-temperature storage. Low-temperature storage is also used to slow/prevent chemical reactions, particularly enzymatic reactions, taking place in the foods.

Moreover, "free" water tends to migrate from a component having a relatively high water activity to a component having a relatively low water activity, thereby increasing the rate of microbial spoilage of the latter component.

The shelf-life of a food may be increased by freezing the food. However, this often has a negative impact on the flavour and texture of the food, especially when the food is a confectionary product comprising a component having a high water activity, e.g. a chocolate-coated fresh fruit. An alternative preservation method in this case is to add an alcohol to the high water activity component; however, this has a significant effect on the flavour of the food. Replacing the high water activity component (e.g. fresh fruit) with a component having a lower water activity (e.g. dried fruit (a_{W}≈0.60)) is also detrimental to the flavour of the food and consumer appeal.

It is known to increase the shelf-life of a food by adding a preservative (e.g. sodium benzoate) or a sugar infusion thereto in order to sufficiently lower the food's water activity. However, such treatments have a negative impact on the flavour and nutritional properties of foods, particularly foods comprising a confectionary material and a high water activity component.

A further known method for preserving a food is thermal pasteurization. This technique is not, however, suited to maintaining the flavour, texture, appearance and nutritional properties of certain foods whilst eliminating micro-organisms in the foods. In particular, the flavour and nutritional properties of a component having a high water activity are often degraded by thermal pasteurization. In addition, chocolate is susceptible to detempering, which causes fat blooms, upon heating and recrystallization.

High-pressure pasteurization (HPP) is a preservation technique which is considered to be a milder alternative to thermal pasteurization. HPP is performed by subjecting an un-packaged or packaged food immersed in a pressure-transmitting liquid to elevated pressures, typically in the order of 200-800 MPa, so as to destroy micro-organisms and deactivate enzymes in the food. This avoids the need to heat the food, thereby avoiding the negative effects caused by thermal pasteurization.

JP 2004-357647 A discloses HPP of a chocolate confectionary comprising raw fruit sealed in a chocolate coating. HPP is performed by immersing the confectionary directly in water as the pressure-transmitting liquid and compressing the water. However, since chocolate is dissolved by water, this method suffers from the disadvantage that the chocolate coating is eroded during HPP. Consequently, the chocolate seal around the fruit filling is compromised, which increases the risk of cross-contamination between the confectionary and the pressure-transmitting liquid and increases the risk of re-contamination of the filling after pasteurization. Erosion of the coating also has an undesirable impact on the surface texture and appearance (e.g. discolouration) of the confectionary.

The chocolate coating of the confectionary disclosed in JP 2004-357647 A is preferably sugar-free in order to mitigate erosion of the coating. However, this limits the composition of the coating subjected to HPP, and subsequent treatment of the confectionary is required to provide it with a sugared coating. Moreover, the confectionary is required to be dried following HPP in water. This carries the risk of damaging the flavour and appearance of the confectionary, for example by causing fat blooms.

The use of water as the pressure-transmitting liquid during HPP also erodes non-confectionary coatings such as a fat-based moisture barrier layer, which may be formed between a high water activity component (e.g. a fruit filling) and a low water activity component (e.g. a chocolate coating) to prevent moisture transfer between the two. This can lead to a loss in barrier functionality.

HPP may also be performed on a pre-packaged food. However, this places restrictions on the packaging since it must be capable of withstanding high pressures whilst maintaining its physical integrity. Metal cans, paperboard-based packages and glass bottle are not suitable for HPP since they are prone to irreversible deformation or fracture under pressure. Packaging comprising different materials can also be unreliable due to the different mechanical properties of the materials. For instance, a plastic package having a metallic film lid (e.g. aluminium) may lose its barrier function as a result of the package and the lid having different compressibilities.

EP 1 891 864 A discloses a method for HPP of a filled confectionary product comprising a high water activity component and a low water activity component after the product is sealed in its final primary packaging. This avoids contact between the pressure-transmitting liquid and reduces the risk of re-contamination of the confectionary product after HPP. However, the packaging is limited to that which can withstand the high pressure treatment. Specifically, the packaging is a hermetically-sealed tray or tub having at least one rigid or semirigid region and at least one flexible region, e.g. a thermo-formed tray sealed with a flexible lid. Such packaging lacks customer appeal, especially when the product is a premium confectionary product such as a chocolate-covered fresh fruit praline.

The confectionary product disclosed in EP 1 891 864 A is also somewhat limited itself since damaged products cannot be removed from the packaging after HPP. The product must therefore be able to withstand HPP in its final packaged form, which precludes the use of confectionary products having, for instance, delicate coatings.

EP 1 621 085 A discloses a method of high pressure treatment of food products, wherein the food products may be packaged after or before the pressure treatment.

High pressure treatment of a food is also known for uses other than pasteurization, e.g. in order to effect structural changes in a food such as coagulation or denaturation of proteins. However, the problem of erosion of a low water activity component such as chocolate persists when the pressure-transmitting liquid is in contact with the food.

Accordingly, it is an object of the present invention to provide a method for the high pressure treatment of a food which is flexible and does not have a negative impact on the structure and appearance of the food.

### Summary of the Invention

A first embodiment of the present invention is a method for treating a food comprising subjecting the food to a pressure of at least 200 MPa in a water-miscible liquid having a water activity of no more than 0.98, wherein the food comprises a component having a water activity of less than 0.80 and a high water activity component having a water activity of 0.80 to 0.99, and wherein the low water activity component which is in direct contact with the liquid surrounds the high water activity component.

It has surprisingly been found that a method as defined above avoids erosion of the component having a water activity of less than 0.80 (hereinafter "the low water activity component") during the high pressure treatment, thus avoiding damage to the structure and appearance of the food and avoiding cross-contamination between the food and the liquid. This affords greater flexibility in the composition of the food, and the liquid does not have to be replaced so often as compared to a liquid having a water activity greater then 0.98 (e.g. water).

Since the low water activity component is not eroded by the liquid, the food does not have to be packaged prior to being pressurized to 200 MPa or more (hereinafter "high pressure treatment"). There is thus little limitation on the structure and composition of the packaging. In addition, the food can be further treated (e.g. by coating or decoration) following the high pressure treatment. Any products which are found to be defective following the treatment can be detected and discarded if necessary.

The method has also been found to produce a food product having a drier surface than that produced following high pressure treatment in water, thereby avoiding the need to subject the food to a separate drying step which may damage its flavour and appearance. The dry surface also allows facile handling and further processing of the food.

### Brief Description of the Drawings

Figure 1: Diagram of a praline in a mould.
Figure 2: Diagram of a de-moulded praline.
Figure 3: Flow-diagram illustrating a method for producing a food according to a preferred embodiment of the invention.

### Detailed Description of the Invention

A method for treating a food according to the above first embodiment of the invention is described in detail below.

### (i) The Food

The food can be in the form of, for instance, a mouthful-sized food (e.g. a praline), a bar, a tablet or a dessert portion-sized food (e.g. a cup-sized food). The food can vary in mass, and preferably has a mass of 5-200 g.

The low water activity component which is in direct contact with the liquid during the high pressure treatment has a water activity of less than 0.80, preferably no more than 0.70, and more preferably no more than 0.50.

The low water activity component may comprise one or more of chocolate, compound chocolate, a fat-based confectionery material, a moisture barrier composition and a sugar-based confectionery such as caramel or toffee. The low water activity component preferably comprises chocolate, a moisture barrier composition or both chocolate and a moisture barrier composition.

Chocolate includes plain, dark, milk, white, bitter and semi-sweet chocolate. Milk chocolate is characterized by the presence of milk ingredients in variable amounts, for example according to the definitions of "milk chocolate", "quality milk chocolate" and "family milk chocolate" in the EU Chocolate Directive (Directive 2000/36/EC). White chocolate is characterized by the absence of cocoa solids. Compound chocolate includes compositions which to some extent exhibit the characteristics of chocolate, milk chocolate or white chocolate but do not comply with the regulatory standards for these chocolates. Examples of compound chocolate include compositions in which cocoa butter has been partially or fully replaced by vegetable fats known as CBE, CBS or CBR, and compositions comprising non-fat ingredients which are not permitted in chocolate complying with regulatory standards governing the type and quantity of ingredients in chocolate, e.g. flour or starches.

Caramel and toffee are produced by cooking a syrup of mono- and/or di-saccharides, optionally together with milk powder, cooling the mixture, and optionally adding a fat source. Caramel is usually characterized by the absence of crystalline sugars, whereas toffee comprises partially-crystalline sugars.

A moisture barrier composition is used to prevent moisture transfer from the food to the environment or to moisture-sensitive components (e.g. chocolate) which may be added after the high pressure treatment. This prevents detrimental changes to the quality of the food. The moisture barrier composition can be any conventional moisture barrier composition such as a fat-based moisture barrier composition or a heterogeneous moisture barrier composition, both of which contain crystalline fats. A heterogeneous moisture barrier is preferred over a pure fat moisture barrier. A heterogeneous moisture barrier composition comprises a fat component having dispersed therein at least 20 wt.%, preferably at least 35 wt.% and more preferably at least 50 wt.%, of a non-fat component. Examples of the non-fat component include one or more of a sugar (e.g. lactose), a polyol, skimmed milk powder, whey powder, de-fatted cocoa powder and water-insoluble fibres.

The food may alternatively comprise additional components. The food comprises a component having a water activity of 0.80-0.99 (hereinafter "the high water activity component") in addition to the low water activity component.

As well as avoiding damage to the flavour, structure, appearance and nutritional profile of the food, the high pressure treatment can be used to effectively pasteurize the high water activity component. This increases the shelf-life of the food and avoids the need to apply the low water activity component onto the high water activity component under aseptic conditions since high pressure pasteurization prevents the transfer of micro-organisms from the high water activity component to the low water activity component.

The high water activity component may comprise one or more of a fruit, a vegetable, a cereal and a dairy component. The high water activity component preferably comprises a fruit, a dairy component or a combination of a fruit and a dairy component, more preferably a fruit.

The terms "a fruit" and "a vegetable" include preparations of a fruit and a vegetable which include no more than 70 wt.%, preferably no more than 50 wt.% and most preferably no more than 35 wt.%, in total of other ingredients such as sugars, polyols, acids, thickeners, flavourings and colourants. The fruit is preferably a fresh fruit, meaning that it contains no non-fruit (i.e. supplementary) ingredients and optionally has had its moisture content reduced (e.g. a fresh fruit concentrate). Examples of the fruit include common fruits such as apples and pears, berry fruits such as strawberry, raspberry, blueberry, cranberry, currants and blackberry; stone fruits such as cherry, peach, nectarine and apricot; and exotic fruits such as banana, kiwi, pineapple, papaya and mango. The fruit can be a whole fruit, fruit pieces, a fruit puree, a fruit juice, a fruit juice concentrate or a mixture thereof. Examples of the vegetable include beets, carrot, celery, aubergine, squash, pumpkin, potato, peppers, lentils and mushrooms. Sugars include sucrose, fructose, maltose, dextrose, glucose and maltose syrups. Polyols include sorbitol, maltitol, lactitol, glycerol and xylitol. Acids include citric acid, lactic acid, malic acid, tartaric acid and ascorbic acid. Thickeners include pectin, guar gum, xanthan gum and carob gum. Flavourings and colourants include natural, nature-identical and artificial flavourings and colourants.

"A cereal" includes whole or broken grain or flour-based materials which may include up to 50 wt.% of other ingredients such as sugars, acids, thickeners and flavourings.

"A dairy component" includes milk, cream, yogurt, sour cream, condensed milk and cheeses such as cottage cheese, quark, cream cheese, ricotta, mozzarella and Burgos-type cheeses. The dairy component may include up to 50 wt.% of other ingredients such as sugars, acids, thickeners and flavourings.

The high water activity component has a water activity of 0.80-0.99, preferably 0.85-0.95, from the viewpoint of providing a food product having a premium flavour. For instance, a food having a filling which consists of a fruit having a water activity of 0.80-0.95 has a pleasant fresh fruit flavour.

The components of the high water activity component may have undergone one or more of blanching, acidification and infusion.

"Blanching" means that the high water activity component (e.g. a fruit) has been subjected to heat for a brief period of time in order to deactivate enzymes which are damaging to the colour, flavour, nutritional profile and texture of the component. Blanching can be carried out by immersing the high water activity component in hot water or steam or by microwave heating it, and is followed by rapid cooling to prevent cooking of the high water activity component t.

"Acidification" means that the pH of the high water activity component has been lowered, for example by fermenting the component using a microbial culture which generates an acid (e.g. lactic acid) or by adding an organic or inorganic acid to the component. Acidification may be carried out to improve the microbial stability, stability of colour or texture, or alter the taste of the high water activity component component.

"Infusion" means that the high water activity component has been immersed in a solution or a syrup for a period of time sufficient to allow diffusion of part of the solution/syrup into the component. The solution is preferably a solution of a sugar or polyol. Such treatment can be used to lower the water activity of the high water activity component and so help preserve it. Acidification of the high water activity component component by adding an organic or inorganic acid thereto as described above may also be carried out by infusion.

The food comprises a high water activity component as well as the low water activity component. It is preferred that the low water activity component constitutes a coating which surrounds a filling comprising the high water activity component. The low water activity component may be formed directly on the high water activity component or may surround the high water activity component via one or more intervening layers. For instance, a moisture barrier layer or a chocolate layer may be formed directly on a filling comprising the high water activity component. Alternatively, a moisture barrier layer and a chocolate layer may both be formed directly on part of the filling; for example, the filling may be partially coated by a moisture barrier layer and partially coated by a chocolate layer. In a preferred embodiment, the coating comprises a moisture barrier layer formed directly on a filling comprising the high water activity component and a chocolate layer is formed on the moisture barrier layer.

It is preferred that the high water activity component is fully enclosed so that it is not contacted by the liquid during the high pressure treatment. This avoids cross-contamination between the high water activity component and the liquid and reduces the risk of re-contamination of the high water activity component after the treatment. Moreover, fully enclosing the high water activity component protects it against damage caused by the high pressure treatment since the pressure is evenly distributed over the surface of the food. The high water activity component is preferably fully enclosed by the low water activity component.

In a particularly preferred embodiment, the food comprises a coating comprising a moisture barrier layer and a chocolate layer both having a water activity of less than 0.80, wherein the moisture barrier layer is formed directly on a filling comprising a high water activity component to fully enclose the filling and the chocolate layer is formed on the moisture barrier layer to at least partially enclose the moisture barrier layer.

In the case that the food comprises a coating comprising a moisture barrier layer, it is preferred that the moisture barrier layer has a thickness of 0.3-4.0 mm, more preferably 0.5-1.5 mm. In the case that the coating comprises a chocolate layer, it is preferred that the chocolate layer has a thickness of 0.5-8.0 mm, more preferably 1.0-4.0 mm.

The food can be manufactured by known methods such as rotary moulding, rotary cutting, extrusion, extrusion and wire cutting, and deposition.

In the case that the food comprises a coating and a filling, the coating may be deposited onto the filling by conventional enrobing or coating methods such as by conveying the formed filling on a belt through a curtain of liquid coating material. The coating is subsequently cooled and solidified. This can be repeated when the coating comprises more than one layer. Preferably though the coating is formed as a shell in a mould and the filling is deposited into the moulded coating. The coating may be moulded using conventional moulding techniques, preferably by stamping (e.g. cold-stamping, frozen-cone or cold-press moulding). The filling material can then be deposited into the moulded coating. The food can be further processed prior to de-moulding by forming an additional coating on the exposed filling to fully enclose the filling. For instance, a moisture barrier layer, a chocolate layer or both a moisture barrier layer and a chocolate layer may be formed on the exposed filling. Preferably, the exposed filling in the mould cavities is covered by a moisture barrier layer to fully enclose the filling.

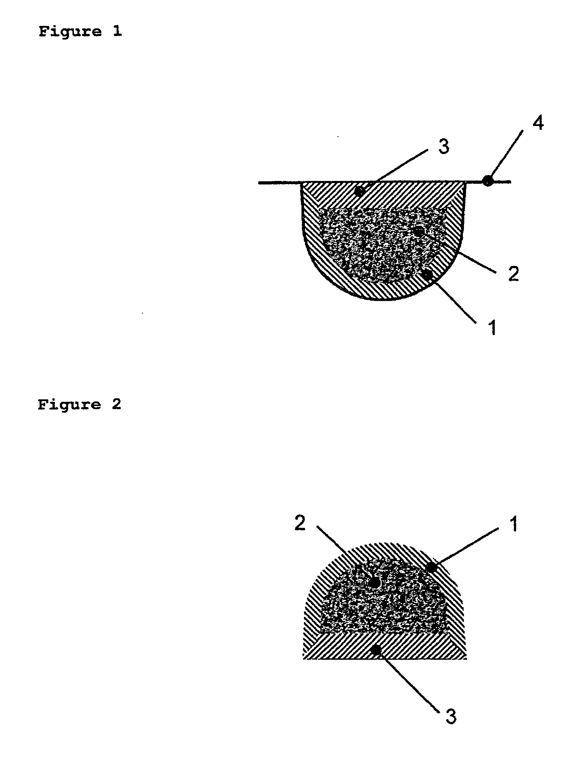

Figure 1 illustrates a food according to a preferred embodiment of the present invention. The food is a praline formed in a mould, the praline comprising a moisture barrier layer (1) moulded as a shell on the inside of a mould cavity (4), a fruit filling (2) formed inside the shell (1) and a further moisture barrier layer (3) formed on top of the filling so that the filling is fully enclosed within the coating formed from the moisture barrier layers (1) and (3). Figure 2 illustrates the praline depicted in Figure 1 once it has been de-moulded. It can be seen that the moisture barrier layer (3) forms the bottom of the praline upon de-moulding.

Further alternative methods for manufacturing the food are available. For instance, the food may be manufactured by a so-called "one-shot" method, whereby a filling and a coating are deposited into a mould at substantially the same time from a depositor nozzle comprising one or more annular conduits arranged around a central conduit.

### (ii) High Pressure treatment

The food is subjected to a pressure of at least 200 MPa in a water-miscible liquid having a water activity of no more than 0.98. This avoids damaging the structure and appearance of the food.

It is preferred that the high pressure treatment is used to pasteurize the food. As mentioned above, the high pressure treatment can effectively pasteurize a high water activity component in the food (e.g. a fruit filling). Similarly, the high pressure treatment can be used to disinfect the surface of the food. The high pressure treatment can though be employed to achieve other effects such as to mould the food, to alter the texture of the food or to transform certain components in the food (e.g. coagulate or denature proteins).

The liquid preferably has a water activity of no more than 0.95, more preferably no more than 0.90 and most preferably no more than 0.85, in order to optimally prevent damage to the structure (i.e. prevent erosion) and appearance of the food. It is also preferred that the liquid has a water activity of no less than 0.70 so that the liquid is not too viscous for handling. The liquid preferably has a water activity of 0.70-0.95, more preferably 0.70-0.90 and most preferably 0.70-0.85.

The liquid is used to apply uniform pressure to the food so that the food is not deformed during the high pressure treatment. The liquid preferably comprises at least one of a salt, a sugar and a polyol dissolved therein so that it has a water activity of no more than 0.98. The salt is preferably sodium chloride. Preferred examples of the sugar include corn syrup, high-fructose corn syrup and sucrose. High-fructose corn syrup (HFCS) is the product of enzymatic processing which converts part of the glucose in corn syrup into fructose. HFCS comprises at least 40 wt.% fructose. Preferred examples of the polyol include glycerol, sorbitol, propylene glycol and mixtures thereof.

It is particularly preferred that the liquid comprises at least one of sucrose, sorbitol and propylene glycol. For a given water activity, these solutes have a minimal effect on the structure and appearance of the food.

The liquid is preferably an aqueous solution, particularly an aqueous solution comprising at least one of a salt, a sugar and a polyol as described above.

The food is pressurized by compressing the liquid containing the food inside a pressure-resistant vessel (e.g. a hydrostatic steel vessel). Heat transfer from the vessel is permitted to control the temperature of the liquid. The pressure is then released after a predetermined period of time.

The food, more particularly the low water activity component, is in direct contact with the liquid during the high pressure treatment. This is achieved by immersing the food directly into the liquid. The food does not therefore have to be pre-packaged, thereby allowing it to be easily handled and further treated after pasteurization. The food may be immersed in the liquid by placing the food in a cage and lowering the cage into the liquid. Alternatively, the liquid is contained in a flexible, non-porous bag (e.g. a polyethylene bag), and the food is immersed in the liquid in the bag. The bag is sealed and immersed in a second liquid inside a pressure-resistant vessel. The second liquid may or may not be the same as the liquid inside the bag, provided that the liquid in contact with the food has a water activity of no more than 0.98. For instance, the second liquid can have a water activity which is greater than 0.98 (e.g. water).

The food is subjected to a pressure of at least 200 MPa, preferably 200-800 MPa, more preferably 400-700 MPa and most preferably 550-650 MPa, in order to effectively treat (e.g. pasteurize) the food whilst avoiding damage to the structure and appearance of the food and minimizing running costs.

Pressure is applied to the food for preferably no more than 10 minutes, more preferably 2-8 minutes. The temperature of the liquid during the high pressure treatment is preferably no more than 50°C, more preferably 10-40°C and most preferably 20-30°C, in order to avoid a negative effect on the flavour, texture, appearance and nutritional properties of the food.

The food may be further treated after the high pressure treatment. For instance, a coating such as a chocolate shell may be formed on the food by coating or enrobing. The food may also be decorated. This may be achieved by sprinkling a powder (e.g. sugar or cocoa) onto the surface of the food or by distributing larger ingredients (e.g. nut pieces) onto the surface of the food. Any defective products can be identified and discarded if necessary.

The food can be packaged following the high pressure treatment and optional further treatment. The type of packaging is not particularly limited, and may be chosen so that the packaged product has maximum consumer appeal. For instance, a praline can be individually wrapped (e.g. in foil), and multiple individually-wrapped pralines, which may not be the same, can then be arranged in a primary package such as a paperboard package.

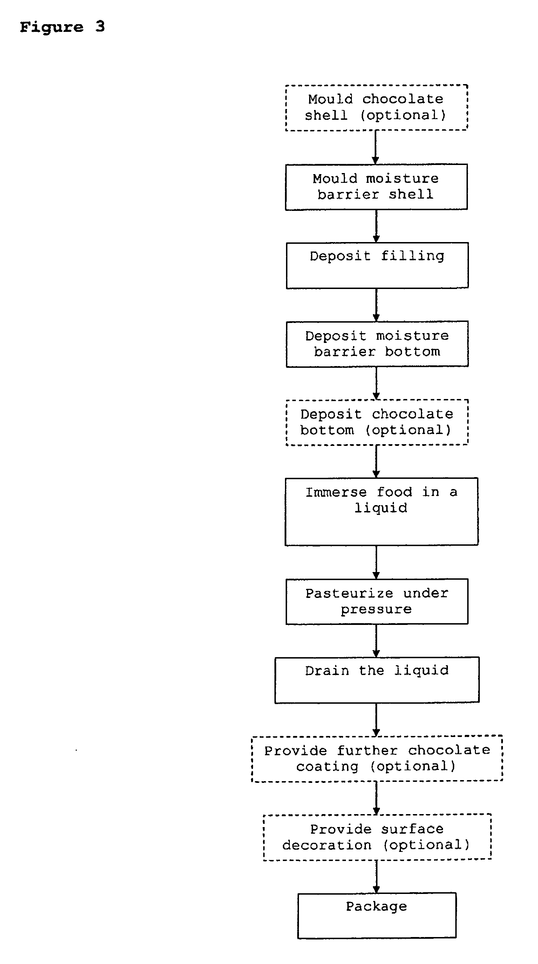

Figure 3 illustrates a method for treating a food according to a preferred embodiment of the invention. The method involves forming a coating having a water activity of no more than 0.80 by moulding a shell comprising a moisture barrier composition inside a mould cavity. This step is optionally preceded by a step of forming a chocolate shell in the mould; the moisture barrier shell is then formed inside the chocolate shell. A filling having a water activity of 0.80-0.99 (e.g. a fruit filling) is subsequently deposited into the shell, and a "bottom" layer comprising a moisture barrier composition is deposited onto the exposed filling to fully enclose the filling within a coating comprising the moisture barrier shell and bottom. A chocolate bottom may optionally be formed on the moisture barrier bottom.

The food is immersed directly in a liquid having a water activity of no more than 0.98 and is subjected to a pressure of at least 200 MPa, as described above. The food is then optionally further processed by forming a chocolate coating thereon and/or by decorating the surface of the food. The food is then packaged as required.

### Examples

The present invention is illustrated by the following Examples.

### Measurement of Water Activity

The water activity (a_{W} value) of a sample of a material under investigation was determined at 25°C using an AquaLab Model XC-2 instrument and following the manufacturer's instructions. The linear offset of the instrument was verified against two known salt standards, one of which displayed an a_{W} value greater than that of the sample and the other of which displayed an a_{W} value less than that of the sample. The a_{W} value of the sample was measured repeatedly until two successive values differed by less than 0.003. The a_{W} value assigned to the material is the average of those two values. The a_{W} value of distilled water is 1.000 ± 0.003.

### Example 1 - treatment of chocolate (not according to invention)

A chocolate composition comprising 50.3 wt.% sucrose, 39.3 wt.% cocoa liquor, 6.7 wt.% cocoa butter, 3.2 wt.% anhydrous milk fat and 0.5 wt.% lecithin (water activity of composition = 0.32) was moulded into four approximately rectangular tablets having an average mass of 5.64 g. The tablets were immersed directly in an aqueous solution of high fructose corn syrup (Isoclear® 55, manufactured by Cargill; water activity = 0.85) in a plastic pouch in an FPG 11500.110 High Pressure ISO LAB System apparatus (manufactured by Stansted Fluid Power, Ltd) and the pouch was sealed. The tablets were subjected to a pressure of 600 MPa for five minutes at an initial temperature of 5°C.

The average mass of the tablets after the high pressure treatment was found to be 5.63 g. The surface appearance of the tablets was unchanged.

The experiment was repeated, except that water was used in place of the high fructose corn syrup. The average mass of the tablets after the high pressure treatment was found to be 4.61 g; that is, the mass of the tablets was reduced by 18% on average. The water inside the pouch was discoloured due to the dissolution of chocolate during the high pressure treatment. This resulted in the tablets having eroded edges. Moreover, the surface colour of the tablets became lighter due to water being absorbed by the tablets.

### Example 2 - treatment of a moisture barrier composition. (not according to invention)

A moisture barrier composition comprising 40 wt.% cocoa butter, 7 wt.% milk protein and 53 wt.% % lactose (water activity of composition = 0.27) was moulded into five approximately spherical tablets having an average mass of 6.032 g. The tablets were immersed directly in an aqueous solution of high fructose corn syrup (Isoclear® 55, manufactured by Cargill; water activity = 0.85) in a plastic pouch in an FPG 11500.110 High Pressure ISO LAB System apparatus (manufactured by Stansted Fluid Power, Ltd) and the pouch was sealed. The tablets were subjected to a pressure of 600 MPa for five minutes at an initial temperature of 5°C.

The mass and appearance of the tablets were found to be unchanged following the high pressure treatment.

The experiment was repeated, except that water was used in place of the high fructose corn syrup. The average mass of the tablets after the high pressure treatment was found to be 6.019 g; that is, the mass of the tablets was reduced by 0.22% on average. Also, white spots were observed on the surface of the tablet, possibly due to the formation of micro-cracks in the surface of the tablets.

### Example 3 - treatment of a food comprising a moisture barrier layer

Four pralines comprising a filling and a coating having the following compositions were manufactured:

### Filling (wt.%):

| | |
|---|---|
| Mango | 58.80% |
| Fructose | 32.77% |
| Glycerol | 7.58% |
| Xanthan gum | 0.30% |
| Guar gum | 0.30% |
| Ascorbic acid | 0.10% |
| Citric acid | 0.10% |
| Potassium sorbate | 0.05% |

The filling was obtained by thawing and homogenizing frozen fresh mango cubes and mixing the mango with the remaining ingredients under vacuum to remove air bubbles in the mixture.

The filling had a water activity of 0.90.

### Coating (wt.%):

| | |
|---|---|
| Cocoa butter | 40% |
| Total Milk Protein | 7% |
| Lactose | 53% |

The coating had a water activity of 0.27.

The pralines were manufactured by depositing the coating composition in liquid form into mould cavities and subjecting the composition to cold-stamping so that it solidified to form a moisture barrier shell. 5.5 g of the filling composition was then deposited into the moisture barrier shell. Finally, the rim of the shell was warmed using heated air to soften it, and a further amount of the liquefied coating composition was deposited onto the filling and the rim of the shell and cooled in order to fully enclose the filling in the moisture barrier coating. The pralines had an diameter of 28 mm, and the coating had a thickness of 2 mm.

The pralines were immersed in an aqueous glycerol solution (water activity = 0.94) in a plastic pouch in an FPG 11500.110 High Pressure ISO LAB System apparatus (manufactured by Stansted Fluid Power, Ltd), and the pouch was sealed. The pralines were subjected to a pressure of 600 MPa for 5 minutes to pasteurize them. The initial temperature of the glycerol solution was 20°C.

The pasteurized pralines were observed for surface defects. The results are shown in Table 1.

### Examples 4-6

Pralines were manufactured and pasteurized as described in Example 3, except that the liquid was altered, as shown in Table 1.

### Example 7 - treatment of a food comprising a moisture barrier layer and a chocolate layer

Four pralines comprising a filling and a coating having the following compositions were manufactured:
Filling: See Example 3

### Coating:

| Chocolate layer (wt.%): | |
|---|---|
| Sucrose | 50.3% |
| Cocoa liquor | 39.3% |
| Cocoa butter | 6.7% |
| Anhydrous milk fat | 3.2% |
| Lecithin | 0.5% |

### Moisture barrier layer (wt.%):

| | |
|---|---|
| Cocoa butter | 32% |
| Anhydrous milk fat | 8% |
| Total Milk Protein | 7% |
| Lactose | 53% |

The moisture barrier layer had a water activity of 0.27, and the chocolate layer had a water activity of 0.32.

The pralines were manufactured by depositing the chocolate layer composition in liquid form into mould cavities and subjecting the composition to cold-stamping so that it solidified to form a chocolate shell having a thickness of 1.2 mm. The moisture barrier layer composition was then deposited in liquid form onto the chocolate shell in the mould cavities and subjected to cold-stamping to solidify the composition and form a moisture barrier layer having a thickness of 1.0 mm on the inside of the chocolate shell. 5.5 g of the filling composition was then deposited onto the moisture barrier layer in the cavities. Subsequently, the rim of the shell was warmed using heated air to soften it, and a further 1.2 g of the liquefied moisture barrier composition was deposited onto the filling and the rim of the shell and cooled in order to form an upper moisture barrier layer. Finally, a further 1.3 g of the chocolate composition was deposited onto the upper moisture barrier layer and solidified by cooling so that, when de-moulded, the filling was fully enclosed in a coating comprising the moisture barrier layers and the chocolate layers. The pralines had a diameter of 28 mm.

The pralines were immersed in an aqueous salt solution (water activity = 0.95) in a pouch in an FPG 11500.110 High Pressure ISO LAB System apparatus (manufactured by Stansted Fluid Power, Ltd), and the pouch was sealed. The pralines were subjected to a pressure of 600 MPa for 5 minutes to pasteurize them. The initial temperature of the salt solution was 20°C.

The pasteurized pralines were observed for surface defects. The results are shown in Table 1.

### Examples 8-13 and Comparative Example 1

Pralines were manufactured and pasteurized as described in Example 7, except that the liquid was altered, as shown in Table 1.

**Table 1**

| Example | Liquid | a_{W} of liquid | Appearance of coating surface |
|---|---|---|---|
| 3 | 18.3 wt.% aq. glycerol solution | 0.94 | White spots; no surface stickiness |
| 4 | 36 wt.% aq. HFCS solution | 0.94 | No white spots; slightly uneven surface; some surface stickiness |
| 5 | 38 wt.% aq. sorbitol solution | 0.95 | Few white spots; no surface stickiness |
| 6 | 43 wt.% aq. sucrose solution | 0.94 | No surface defects |
| 7 | 7.7 wt.% aq. sodium chloride solution | 0.95 | Lightened colour; white spots |
| 8 | 36 wt.% aq. HFCS solution | 0.94 | Slightly dull surface; no white spots |
| 9 | 58 wt.% aq. HFCS solution | 0.88 | Slightly dull surface; no white spots |
| 10 | 77 wt.% aq. HFCS solution | 0.74 | No surface defects - surface gloss maintained |
| 11 | 38 wt.% aq. sorbitol solution | 0.95 | Surface colour maintained; some white spots |
| 12 | 63 wt.% aq. sorbitol solution | 0.83 | Surface colour maintained; no white spots |
| 13 | 100 wt.% propylene glycol | ∼0.94 | No surface defects |
| 1* | 100 wt.% palm oil | 0.62 | Irregular and smeary |

| | | | |
|---|---|---|---|
| * Comparative Example | | | |

It can be seen from the results in Table 1 that the high pressure pasteurization of a praline in a water-miscible liquid having a water activity of no more than 0.98 produces few surface defects. In contrast, the use of palm oil (a non water-miscible liquid) as the liquid erodes the low water activity chocolate coating on the pralines. In particular, the continuous lipid phase of palm oil erodes the lipid structure of the coating.

### Example 14 - moisture loss

10 pralines were manufactured and pasteurized as described in Example 9.

The pasteurized pralines were placed in a desiccator over silica gel and stored at 22°C. The mass loss of the pralines (i.e. the moisture loss) was measured after 46 days. It was found that the average mass loss of the pralines was less than 0.1 g.

### Example 15 - moisture loss

10 pralines were manufactured as described in Example 7. The pralines were immersed directly in an aqueous sucrose solution (43 wt.%) having a water activity of 0.94 and pasteurized under a pressure of 600 MPa for 5 minutes. The initial temperature of the liquid was 20°C.

The pasteurized pralines were placed in a desiccator over silica gel and stored at 22°C as described in Example 14. It was found that the average mass loss of the pralines after 46 days was less than 0.1 g

The results of Examples 14 and 15 show that high pressure pasteurization of pralines using a liquid having a water activity of no more than 0.98 did not damage the coating of the pralines since only a minimal loss of moisture from the pralines was observed following storage. That is, the high pressure treatment did not produce cracks in the coating through which moisture from the filling could migrate. Cracks in the coating would have been detected by a rapid loss of moisture in the order of 0.5 g or more.

## Claims

1. A method for treating a food comprising subjecting the food to a pressure of at least 200 MPa in a water-miscible liquid having a water activity of no more than 0.98, wherein the food comprises a component having a water activity of less than 0.80 and a high water activity component having a water activity of 0.80 to 0.99, and wherein the low water activity component which is in direct contact with the liquid surrounds the high water activity component.

2. A method according to Claim 1, wherein the liquid has a water activity of no more than 0.90.

3. A method according to Claim 1 or Claim 2, wherein the liquid comprises at least one of a salt, a sugar and a polyol.

4. A method according to Claim 3, wherein the liquid comprises at least one of high-fructose corn syrup, sucrose, glycerol, sorbitol and propylene glycol.

5. A method according to any preceding claim, wherein the component having a water activity of less than 0.80 has a water activity of no more than 0.70.

6. A method according to any preceding claim, wherein the component having a water activity of less than 0.80 comprises a moisture barrier composition.

7. A method according to any preceding claim, wherein the component having a water activity of less than 0.80 comprises chocolate.

8. A method according to Claim 7, wherein the component having a water activity of 0.80-0.99 comprises at least one of a fruit and a dairy component.

9. A method according to any preceding claim, wherein the method is for pasteurizing the food.

## Patentansprüche

1. Verfahren zum Behandeln eines Nahrungsmittels, umfassend das Unterwerfen des Nahrungsmittels unter einen Druck von mindestens 200 mPa in einer mit Wasser mischbaren Flüssigkeit mit einer Wasseraktivität von nicht größer als 0,98, worin das Nahrungsmittel eine Komponente mit einer Wasseraktivität von weniger als 0,80 und eine Komponenten mit hoher Wasseraktivität, die eine Wasseraktivität von 0,80 bis 0,99 aufweist, umfasst, und worin die Komponente mit niedriger Wasseraktivität, die im direkten Kontakt mit der Flüssigkeit steht, die Komponente mit hoher Wasseraktivität umgibt.

2. Verfahren gemäß Anspruch 1, worin die Flüssigkeit eine Wasseraktivität von nicht größer als 0,90 aufweist.

3. Verfahren gemäß Anspruch 1 oder Anspruch 2, worin die Flüssigkeit mindestens eines von einem Salz, einem Zucker und einem Polyol umfasst.

4. Verfahren gemäß Anspruch 3, worin die Flüssigkeit mindestens eines von Maissirup mit hohem Fructosegehalt, Saccharose, Glycerol, Sorbitol und Propylenglykol umfasst.

5. Verfahren gemäß irgendeinem vorhergehenden Anspruch, worin die Komponente mit einer Wasseraktivität von kleiner als 0,80 eine Wasseraktivität von nicht größer als 0,70 aufweist.

6. Verfahren gemäß irgendeinem vorhergehenden Anspruch, worin die Komponente mit einer Wasseraktivität von kleiner als 0,80 eine Feuchtigkeitsbarrierenzusammensetzung umfasst.

7. Verfahren gemäß irgendeinem vorhergehenden Anspruch, worin die Komponente mit einer Wasseraktivität von kleiner als 0,80 Schokolade umfasst.

8. Verfahren gemäß Anspruch 7, worin die Komponente mit einer Wasseraktivität von 0,80 bis 0,99 mindestens eines von einer Frucht und einer Molkereierzeugniskomponente umfasst.

9. Verfahren gemäß irgendeinem vorhergehenden Anspruch, worin das Verfahren für die Pasteurisierung des Nahrungsmittels eingesetzt wird.

## Revendications

1. Procédé pour traiter un aliment, comprenant l'étape consistant à soumettre l'aliment à une pression d'au moins 200 MPa dans un liquide miscible à l'eau, ayant une activité d'eau non supérieure à 0,98, dans lequel l'aliment comprend un constituant ayant une activité d'eau inférieure à 0,80 et un constituant à forte activité d'eau, ayant une activité d'eau de 0,80 à 0,99, et dans lequel le constituant à faible activité d'eau qui est en contact direct avec le liquide entoure le constituant à forte d'activité d'eau.

2. Procédé suivant la revendication 1, dans lequel le liquide a une activité d'eau non supérieure à 0,90.

3. Procédé suivant la revendication 1 ou la revendication 2, dans lequel le liquide comprend au moins une des substances consistant en un sel, un sucre et un polyol.

4. Procédé suivant la revendication 3, dans lequel le liquide comprend au moins une des substances consistant en sirop de maïs à haute teneur en fructose, saccharose, glycérol, sorbitol et propylèneglycol.

5. Procédé suivant l'une quelconque des revendications précédentes, dans lequel le constituant ayant une activité d'eau inférieure à 0,80 a une activité d'eau non supérieure à 0,70.

6. Procédé suivant l'une quelconque des revendications précédentes, dans lequel le constituant ayant une activité d'eau inférieure à 0,80 comprend une composition faisant barrière à l'humidité.

7. Procédé suivant l'une quelconque des revendications précédentes, dans lequel le constituant ayant une activité d'eau inférieure à 0,80 comprend du chocolat.

8. Procédé suivant la revendication 7, dans lequel le constituant ayant une activité d'eau de 0,80 à 0,99 comprend au moins un d'un fruit et d'un produit laitier.

9. Procédé suivant l'une quelconque des revendications précédentes, ledit procédé étant destiné à la pasteurisation de l'aliment.
